# EUROPÄISCHE PATENTSCHRIFT

(11) **EP 1 867 024 B1**
(45) Veröffentlichungstag und Bekanntmachung des Hinweises auf die Patenterteilung: **27.08.2008**
(21) Anmeldenummer: 06706620.9
(22) Anmeldetag: 03.02.2006
(51) Int. Cl.: H02G 3/06

(54) **LEITUNGSDURCHFÜHRUNGSVORRICHTUNG**
CABLE BUSHING DEVICE
DISPOSITIF DE TRAVERSEE DE CABLE

(30) Priorität: 04.04.2005 DE 202005005297 U
(43) Veröffentlichungstag der Anmeldung: 19.12.2007
(73) Patentinhaber: Cooper Crouse-Hinds GmbH, 69412 Eberbach (DE)
(72) Erfinder: HOFMANN, Gerd, 69412 Eberbach (DE); NAUMANN, Reiner, 68239 Mannheim (DE)
(74) Vertreter: Grünecker, Kinkeldey, Stockmair & Schwanhäusser Anwaltssozietät
(86) Internationale Anmeldenummer: PCT/EP2006/000952
(87) Internationale Veröffentlichungsnummer: WO 2006/105820

(56) Entgegenhaltungen:
- DE-A1- 2 607 164
- GB-A- 598 321
- NL-A- 9 300 229

## Beschreibung

Die Erfindung betrifft eine Leitungsdurchführungsvorrichtung zur Durchführung von elektrischen Leitungen durch insbesondere zwei benachbarte, explosions- und/oder schlagwettergeschützte Gehäuse. Eine solche Leitungsdurchführungsvorrichtung weist einen in etwa hülsenförmigen Außenkörper auf, welcher mit gegenüberliegenden ersten und zweiten Endabschnitten in entsprechende Bohrungen der Gehäuse einsetzbar ist. Weiterhin weist eine solche Vorrichtung wenigstens einen in eine Axialöffnung des Außenkörpers eingesetzten Einsatz zur Halterung der durch die Leitungsdurchführungsvorrichtung hindurchgeführten elektrischen Leitungen auf. Eine Befestigungseinrichtung dient dabei zur Befestigung der Leitungsdurchführungsvorrichtung an zumindest einem der Gehäuse.

Solche Leitungsdurchführungsvorrichtungen sind beispielsweise aus der DE 3 732 576 und DE 3 710 276 bekannt. Durch diese werden zwei Gehäuse durch einander zuweisende Gehäusewandungen elektrisch miteinander verbunden, indem die entsprechenden elektrischen Leitungen durch die Wandungen und die in diesen ausgebildeten Gehäusebohrungen mittels der Leitungsdurchführungsvorrichtung ebenfalls in der Regel explosions- und/oder schlagwettergeschtitzt hindurchgeführt sind. Eine solche Vorrichtung umfasst dabei einen im Wesentlichen hülsenförmigen Außenkörper, der durch die Gehäusebohrungen hindurchgesteckt ist und in den elektrisch miteinander zu verbindenden Gehäusen endet. In diesem Außenkörper ist ein oder sind auch mehrere Einsätze angeordnet, durch die die entsprechenden elektrischen Leitungen geführt und gegebenenfalls auch gehalten bzw. fixiert sind. Um insbesondere den Außenkörper bezüglich der Gehäusebohrungen oder der Gehäusewandungen zu fixieren, weist dieser in der Regel zwei Außengewinde als Befestigungseinrichtung auf, mit denen er mit entsprechenden Innengewinden jeder der Gehäusebohrungen verschraubt wird.

Durch die Verwendung einer solchen Befestigungseinrichtung mit zwei Außen- und entsprechend zwei Innengewinden ergibt sich zwar der entsprechende Explosions-und/oder Schlagwetterschutz, wobei gegebenenfalls zusätzliche Dichtelemente oder dergleichen vorgesehen sind. Allerdings muss die Ausrichtung der Gehäusebohrungen sehr genau sein, damit ein solches Verschrauben fehlerfrei möglich ist. Ebenso gelten für die entsprechenden Gewinde äußerst geringe Toleranzen, damit nicht nur die Ausrichtungen der Gehäusebohrungert relativ zum Außenkörper korrekt erfolgen, sondern auch ein fehlerfreies Verschrauben möglich ist.

Weiterhin ist bei dem vorbekannten Stand der Technik zu beachten, dass bei in bereits einer Gehäusebohrung eingeschraubtem und entsprechend befestigtem Außenkörper zum Befestigen in der anderen Gehäusebohrung im Wesentlichen das gesamte zweite Gehäuse zum Verschrauben mit dem Außenkörper gedreht werden muss. Dies erfordert relativ viel Platz zur Drehung des Gehäuses selbst und ist teilweise nur eingeschränkt oder gar nicht möglich. Außerdem ist beim Drehen des Gehäuses selbst die entsprechende Zuordnung von Innengewinde der Gehäusebohrung und Außengewinde des Außenkörpers äußerst schwierig, aufgrund der zum Teil mangelnden Ausrichtung von Gehäusebohrung und Außenkörper.

Die NL 9300229 A zeigt eine Leitungs durch führung mit den Merkmalen des Oberbegriffs von Anspruch 1.

Der Erfindung liegt daher die Aufgabe zugrunde, eine Leitungsdurchführungsvorrichtung der eingangs genannten Art dahingehend zu verbessern, dass die Montage unter Beibehaltung aller positiven Eigenschaften hinsichtlich Explosions- und/oder Schlagwetterschutz vereinfacht und gleichzeitig höhere Toleranzen bei der Fertigung der Gehäusebohrungen möglich sind.

Diese Aufgabe wird durch die Merkmale des Anspruchs 1 gelöst.

Nur eine der Gehäusebohrungen weist ein entsprechendes Innengewinde auf, in das der Außenkörper mit dem entsprechenden Außengewinde einge-schraubt wird. Ist die Leitungsdurchführungsvorrichtung so an dem einen Gehäuse befestigt, kann die andere Gehäusebohrung einfach auf den anderen, noch nicht befestigten Endabschnitt des Außenkörpers aufgeschoben werden, da an dieser Stelle kein Verschrauben zwischen Gehäusebohrung und Außenkörper stattfindet Dadurch sind höhere Toleranzen für diese entsprechende Gehäusebohrung möglich.

Um in diesem Zusammenhang sicherzustellen, dass der Außenkörper auch relativ zu diesem, ohne Innengewinde in seiner Gehäusebohrung ausgebildeten Gehäuse fixiert ist, ist dem entsprechenden Endabschnitt des Außenkörpers ein radial nach außen abstehendes Anschlagelement zugeordnet. Dieses drückt von der Innenseite des Gehäuses an die entsprechende Gehäusewandung und fixiert diese hinsichtlich des mit dem Außenkörper verschraubten Gehäuses. Um dabei den Andruck zwischen Anschlagelement und Gehäusewandung ausreichend groß zu gestalten, ist auf dem mit dem anderen Gehäuse verschraubten Endabschnitt des Außenkörpers eine Befestigungsmutter angeordnet, die gegen die entsprechende Innenseite der zugeordneten Gehäusewandung in Anlage bringbar ist, wobei durch deren Aufschrauben auf den ersten Endabschnitt das Anschlagelement mit ausreichender Anpresskraft auf die Innenwandung des anderen Gehäuses drückt. Dadurch wird einerseits die Leitungsdurchführungsvorrichtung korrekt zwischen beiden Gehäusen angeordnet und andererseits erfolgt gleichzeitig eine Fixierung der entsprechenden Gehäuse relativ zueinander.

Um in einfacher Weise einen gewissen Abstand zwischen den Gehäusen nach Einset-zen der Leitungsdurchführungsvorrichtung aufrecht zu erhalten, weist der Außenkörper erfindungsgemäß in etwa mittig ein zumindest stellenweise radial nach außen abstehendes Abstandselement auf, welches zwischen den Gehäusen bei eingesetzter Leitungsdurchführungsvorrichtung angeordnet ist.

Durch diese erfindungsgemäße Maßnahme wird die Montage der Leitungsdurchführungsvorrichtung erheblich vereinfacht und schneller durchführbar. Gleichzeitig sind größere Toleranzen zumindest bei der nicht zu verschraubenden Gehäusebohrung möglich, da diese einfach auf den zweiten Endabschnitt des Außenkörpers aufgesteckt wird.

Das Anschlagelement kann in verschiedenen Weisen auf den zweiten Endabschnitt des Außenkörpers nach Einsetzen in der entsprechenden Gehäusebohrung aufgesetzt und auf diesem zweiten Endabschnitt befestigt werden.

Das Abstandselement kann elastisch und kompressibel ausgebildet sein, um durch Aufschrauben der Befestigungsmutter eine ausreichende Anpresskraft des Anschlagselements zu ermöglichen.

Bei einem einfachen Ausführungsbeispiel kann das Abstandselement als um den Außenkörper umlaufender Randflansch ausgebildet sein. Dieser kann einteilig mit dem Außenkörper gebildet sein. Die Materialien für Randflansch und übrigen Außenkörper können dabei unterschiedlich sein.

Zum Einstecken der entsprechenden Endabschnitte des Außenkörpers sind diese kreisförmig ausgebildet, wobei der übrige Außenkörper außerhalb dieser Endabschnitte auch andere geometrische Formen aufweisen kann. Um die Herstellung des Außenkörpers allerdings zu vereinfachen, kann dieser einen im Wesentlichen kreisförmigen Querschnitt aufweisen und der Randflansch ringförmig um diesen umlaufen.

Um auch zwischen den Gehäusen in einfacher Weise sicherzustellen, dass der entsprechende Explosions- und/oder Schlagwetterschutz aufrecht erhalten werden kann, kann der Randflansch insbesondere auf seinen beiden, jeweils zu den Gehäusen weisenden Seitenflächen ein umlaufendes Dichtelement aufweisen. Ein solches Dichtelement kann beispielsweise ein O-Ring sein. Weiterhin können die Seitenflächen als Spaltflächen ausgebildet sein, wodurch der Explosions- und/oder Schlagwetterschutz insbesondere gewährleistet wird.

Um die Montage des Außenkörpers in diesem Zusammenhang zu vereinfachen, kann das Dichtelement teilweise in einer in der Seitenfläche ausgebildeten Aufnahmevertiefung angeordnet sein. Dadurch wird das Dichtelement bei der Montage gehalten und ein Lösen des Dichtelements bei der Montage oder auch beim Transport der Leitungsdurchführungsvorrichtung ist im Wesentlichen verhindert.

Um im Außenkörper gegebenenfalls auch unterschiedliche Einsätze anordnen zu können, kann ein solcher Einsatz innerhalb der Axialöffnung lösbar eingesetzt sein. Verschiedene Einsätze sind beispielsweise zur Durchführung unterschiedlicher Anzahlen von elektrischen Leitungen, zur Halterung von elektrischen Leitungen unterschiedlicher Durchmesser oder dergleichen verwendbar.

Es besteht ebenfalls die Möglichkeit, mehrere Einsätze hintereinander in Axialrichtung der Axialöffnung anzuordnen, siehe beispielsweise die DE 3 732 576, und zwischen den Einsätzen noch Abstandskörper anzuordnen.

Es besteht ebenfalls die Möglichkeit, dass nur ein Einsatz verwendet wird, der zumindest eine im Wesentlichen in Axialrichtung verlaufende Aufnahme aufweist, von welcher die elektrischen Leitungen aufgenommen und gegebenenfalls auch gehalten sind. Eine solche entsprechende Aufnahme kann eine Reihe von Kanälen umfassen, durch die jeweils eine elektrische Leitung hindurchgeführt ist. Eine solche Aufnahme kann ebenfalls eine oder mehrere Stecköffnungen zum Einstecken von an den elektrischen Leitungen angebrachten Steckverbindungseinrichtungen aufweisen. Dadurch erfolgt im Wesentlichen keine direkte Hindurchführung einer elektrischen Leitung durch die Leitungsdurchführungsvorrichtung, sondern die Durchführung erfolgt über eine Steckverbindungseinrichtung mit entsprechend zueinander passenden Steckverbindern an jeder der zu verbindenden elektrischen Leitungen.

Bei einem Beispiel für eine solche Steckverbindungseinrichtung mit Flachsteckem und Flachsteckhülsen kann die Stecköffnung im Wesentlichen schlitzförmig zum Einstecken eines solchen Flachsteckers ausgebildet sein. Ein solcher Flachstecker ist an einem Ende einer elektrischen Leitung angeordnet, die von einem Gehäuse in die Leitungsdurchführungsvorrichtung eingeführt ist. Von dem anderen Gehäuse wird eine weitere elektrische Leitung mit einer entsprechenden Flachsteckhülse in die Leitungsdurchführungsvorrichtung eingeführt und dann mit dem in der Stecköffnung gehaltenen Flachstecker verbunden.

Bei einem einfachen Ausführungsbeispiel des oben genannten Anschlags, kann dieser als auf dem zweiten Endabschnitt angeordnete und insbesondere aufschraubbare Anschlagmutter ausgebildet sein. Diese wird nach Anordnen des Außenkörpers zwischen beiden Gehäusen und Einstecken der entsprechenden Endabschnitte in die zugeordneten Gehäusebohrungen auf den zweiten Endabschnitt aufgebracht und dort aufgeschraubt. Dadurch besteht die Möglichkeit, praktisch von beiden Seiten des Außenkörpers her entsprechende Muttern aufzuschrauben und die zugeordneten Gehäusewandungen an die Dichtelemente des Abstandselements bzw. Randflansches anzudrücken.

Um gegebenenfalls beim Aufschrauben der entsprechenden Muttern eine Beschädigung der Gehäusewandung zu vermeiden oder auch um mit relativ wenigen Umdrehungen der entsprechenden Muttern eine Befestigung relativ zur Gehäusewandung zu ermöglichen, kann zwischen Anschlagmutter und/oder zwischen Befestigungsmutter und Randflansch ein im Wesentlichen ringförmiges Abstandsteil angeordnet sein. Dies liegt bei in den entsprechenden Gehäusebohrungen eingesetztem Außenkörper jeweils an der Gehäusewandung gegenüberliegend zum Randflansch an und ermöglicht durch wenige Umdrehungen der entsprechenden Mutter eine ausreichende Befestigung.

Die Wirkung dieses Abstandsteils kann auch dadurch verbessert werden, wenn dieses als Federring ausgebildet ist.

Das Einsetzen insbesondere des zweiten Endabschnitts in die Gehäusebohrung ohne Innengewinde kann dadurch noch vereinfacht werden, wenn der Außenkörper an zumindest diesem Endabschnitt wenigstens zwei insbesondere einander gegenüberliegende Flachbereiche auf seiner Außenseite aufweist.

Im Folgenden wird die Erfindung anhand der in den Figuren beigefügten Zeichnungen weiter erläutert.

Es zeigen:
- Figur 1: einen Längsschnitt durch zwei nebeneinander angeordnete, mit einer erfindungsgemäßen Leitungsdurchführungsvorrichtung versehene Gehäuse;
- Figur 2: eine vergrößerte Darstellung des Details "X" aus Figur 1;
- Figur 3: einen Längsschnitt durch die Leitungsdurchführungsvorrichtung nach Figur 2, und
- Figur 4: eine perspektivische Schrägansicht von einer Seite auf zwei nebeneinander angeordnete Leitungsdurchführungsvorrichtungen, von denen eine im Längsschnitt nach Figur 3 dargestellt ist.

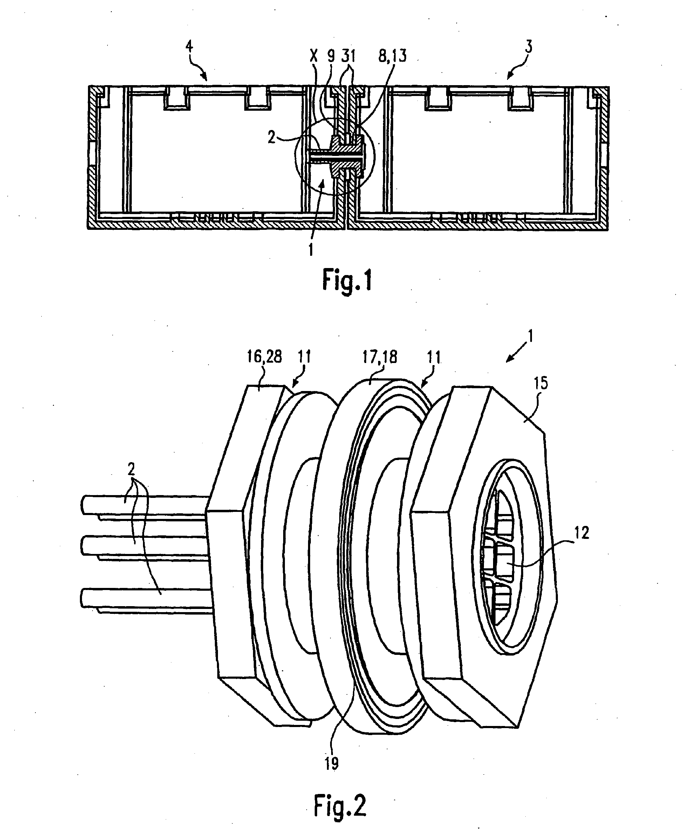

Figur 1 zeigt einen Längsschnitt durch zwei nebeneinander angeordnete Gehäuse 3 und 4, die jeweils explosions- und/oder schlagwettergeschützt ausgeführt sind. Die beiden Gehäuse 3, 4 weisen in ihren einander zuweisenden Gehäusewandungen 31 Gehäusebohrungen 8, 9 auf, in denen eine erfindungsgemäße Leitungsdurchführvorrichtung 1 angeordnet ist. Diese dient zur Durchführung entsprechender elektrischer Leitungen 2 zwischen den Gehäusen, wobei diese Durchführung ebenfalls explosions- und/oder schlagwettergeschützt ist. Die dem Gehäuse 3 zugeordnete Gehäusebohrung 8 weist ein Innengewinde 13 auf, mit dem ein entsprechendes Außengewinde, siehe die folgenden Figuren, der Leitungsdurchführvorrichtung 1 verschraubt ist. Zwischen den beiden Gehäusewandungen 31 ist ein Abstandselement 17, siehe auch die folgenden Figuren, angeordnet, das Teil der Leitungsdurchführvorrichtung 1 ist.

Zur Vereinfachung sind die elektrischen Leitungen 2 verkürzt und weitere Einrichtungen in den Gehäusen 3 und 4 nicht dargestellt.

Die folgenden Figuren zeigen eine vergrößerte Darstellung des Details "X" aus Figur 1, in dem ein Ausführungsbeispiel der erfindungsgemäßen Leitungsdurchführvorrichtung 1 dargestellt ist.

Gleiche Teile sind in den folgenden Figuren durch jeweils gleiche Bezugszeichen gekennzeichnet, und werden teilweise nur im Zusammenhang mit einer Figur erwähnt.

Figur 2 ist eine Außenansicht der Leitungsdurchführvorrichtung 1 ohne Teile der Gehäuse 3 und 4 dargestellt.

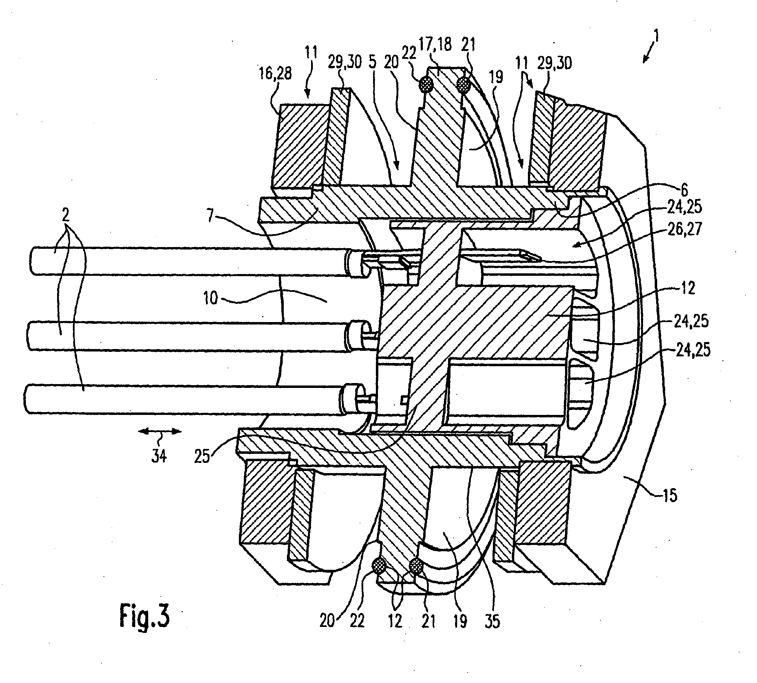

Die Leitungsdurchführvorrichtung 1 weist einen Außenkörper 5 auf, siehe auch Figur 3, von dem in etwa mittig ein Abstandselement 17 radial nach außen absteht. Dieses ist im Wesentlichen als ringförmig umlaufender Randflansch 18 ausgebildet. Auf den beiden Seitenflächen 19, 20 des Randflansches 18 sind Dichtelemente 21, 22, siehe auch Figur 3, in entsprechenden Aufnahmevertiefungen 23 angeordnet. Der Randflansch 18 ist, siehe Figur 1, zwischen den einander zuweisenden Gehäusewandungen 31 angeordnet und dichtet diese über die entsprechenden Dichtelemente 21, 22 relativ zu den Gehäusebohrungen 8, 9 ab.

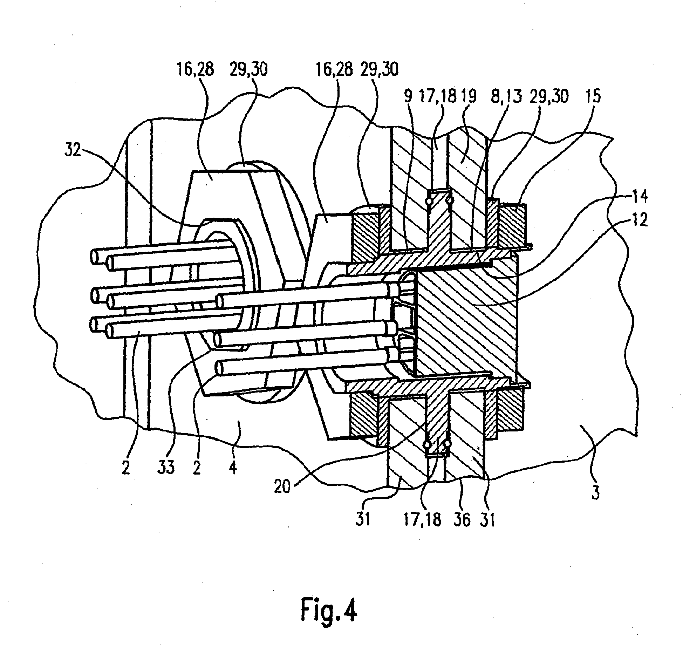

Der Außenkörper 5 weist einen ersten Endabschnitt 6 auf, der dem Gehäuse 3 zugeordnet ist, und einen zweiten Endabschnitt 7, der dem Gehäuse 4 zugeordnet ist. Auf dem ersten Endabschnitt 6 ist ein Außengewinde 14 vorgesehen, siehe auch Figur 4, das mit dem entsprechenden Innengewinde 13 nach Figur 1 in der Gehäusewandung des Gehäuses 3 in Eingriff ist. Durch diese beiden Gewinde 13, 14 erfolgt ein Einschrauben des Außenkörpers 5 in die entsprechende Gehäusebohrung 8. Dies erfolgt, bis der Randflansch 18 mit seiner entsprechenden Seitenfläche 19 in Anlage mit der Außenseite der zugehörigen Gehäusewandung 31 ist. Zur Befestigung des Außenkörpers 5 in dieser entsprechenden Position dient weiterhin eine Befestigungsmutter 15, die Teil einer Befestigungseinrichtung 11 ist. Die Befestigungsmutter 15 wird entsprechend auf das Außengewinde im ersten Endabschnitt 6 aufgeschraubt. Zwischen dieser und einer Innenseite der Gehäusewandung, siehe auch Figur 1, ist weiterhin ein Federring 30 als Abstandsteil 29 angeordnet.

Auf dem zweiten Endabschnitt 7 ist als weiterer Teil der Befestigungseinrichtung 11 eine Anschlagmutter 28 als Anschlagelement 16 angeordnet. Diese ist analog zur Befestigungsmutter 15 auf dem zweiten Endabschnitt 7 mittels eines entsprechenden Außengewindes aufschraubbar. Auch zwischen Anschlagmutter 28 und einer entsprechenden Innenseite der zugehörigen Gehäusewandung, siehe Figur 1, ist ein Federring 30 als Abstandsteil 29 angeordnet.

In Figur 3 ist ein Längsschnitt durch die Leitungsdurchführvorrichtung 1 nach Figur 2 dargestellt. Innerhalb einer Axialöffnung 10, die sich durch den gesamten Außenkörper 5 in Axialrichtung 34 erstreckt, ist ein Einsatz 12 angeordnet. Dieser ist insbesondere lösbar innerhalb des Außenkörpers 5 angeordnet. Der Einsatz 12 weist Aufnahmen 24 auf, durch die die entsprechenden elektrischen Leitungen 2 hindurchgeführt oder zumindest mit Flachsteckem 26 als Teil einer Steckverbindungseinrichtung 27 angeordnet sind. Die Aufnahmen 24 weisen zu diesem Zweck Stecköffnungen 25 auf, in die die Flachstecker 26 eingesteckt und dort gehaltet sind. Ein freies Ende der jeweiligen Flachstecker 26 steht gegenüberliegend zu den in Figur 3 dargestellten elektrischen Leitungen 2 aus den entsprechenden Stecköffnungen 25 vor und dient zur Verbindung von nicht dargestellten Flachsteckhülsen an weiteren elektrischen Leitungen, die zusammen mit den Flachsteckern die entsprechende Steckverbindungseinrichtung 27 bilden. Bei dem dargestellten Ausführungsbeispiel weist der Einsatz 12 insgesamt sechs Aufnahmen 24 mit entsprechenden Stecköffnungen 25 auf. Es sind allerdings auch andere Einsätze 12 verwendbar, die mehr oder weniger Aufnahmen und auch kanalförmige Aufnahmen direkt zur Durchführung elektrischer Leitungen ohne Verwendung entsprechender Steckverbindungseinrichtungen aufweisen.

In Figur 3 ist weiterhin erkennbar, wie von einer Außenseite 35 des Außenkörpers 5 der Randflansch 18 radial nach außen absteht und ringförmig den Außenkörper 5 umgibt Die entsprechenden Seitenflächen 19, 20 sind beabstandet zu Federringen 30 mit jeweils zugehöriger Mutter 15, bzw. 28 angeordnet, wobei zwischen diesen die Gehäusewandungen, siehe Figur 1, bei in den Gehäusebohrungen 8, 9 angeordnete Leitungsdurchführvorrichtung 1 aufgenommen sind.

Erfindungsgemäß ist nur ein Außengewinde 14 am Außenkörper 5 zur Befestigung mit einem entsprechenden Innengewinde 13 einer Gehäusebohrung 8 vorgesehen. Auf dem anderen Endabschnitt 7 fehlt ein solches Außengewinde 14 und statt dessen wird der entsprechende Bereich des zweiten Endabschnitts nur in die zugehörige Gehäusebohrung 9 eingesteckt, so dass höhere Toleranzen bei der Fertigung einer solchen Gehäusebohrung möglich sind und gegebenenfalls auch gewissen Abweichungen in der Ausrichtung der Gehäusebohrungen 8 und 9 beim Einsetzen der Leitungsdurchführvorrichtung 1 möglich sind.

Nur am freien Ende des zweiten Endabschnitts 7 ist ein entsprechendes Außengewinde zur Befestigung der Anschlagmutter 28 vorgesehen.

In Figur 4 ist eine perspektivische Ansicht von schräg vorne auf eine Leitungsdurchführvorrichtung nach Figur 2 dargestellt, wobei direkt neben dieser eine zweite Leitungsdurchführvorrichtung 1 angeordnet ist. Diese sind gleichartig aufgebaut, siehe auch die vorangehende Beschreibung.

In Figur 4 ist erkennbar, wie durch Verschrauben der Muttern 15 und 28 eine Befestigung der Leitungsdurchführvorrichtung 1 an den Gehäusewandungen 31 erfolgt, wobei der entsprechende Randflansch 18 zwischen diesen Gehäusewandungen angeordnet ist. Der Randflansch 18 ist mit seinen umflaufenden Dichtelementen 21, 22, die als O-Ringe ausgebildet sind, mit entsprechenden Außenseiten der Gehäusewandungen 31 in Anlage. In einander zuweisenden Außenseiten der Gehäusewandungen 31 kann eine im Wesentlichen kreisförmige Vertiefung 36 vorgesehen sein, die zur teilweisen Aufnahme des Randflansches 18 dient. Dadurch wird die Dichtwirkung zwischen Gehäusewandung und Randflansch mit den dazwischen angeordneten Dichtelementen weiter verbessert.
Im Folgenden wird kurz das Einsetzen einer Leitungsdurchführvorrichtung gemäß Erfindung anhand der beigefügten Figuren beschrieben.

Die Leitungsdurchführvorrichtung 1 wird mittels des Außenkörpers 5 und des entsprechenden Außengewindes 14 am ersten Endabschnitt 6 in die Gehäusebohrung 8 mit Innengewinde 13 eingeschraubt. Das Einschrauben erfolgt solange, bis der Randflansch 18 an der Außenseite der entsprechenden Gehäusewandung 31 anliegt. Von der Innenseite der Gehäusewandung 31 ist dann der Federring 30 als Abstandsteil 19 aufsetzbar und mittels der Befestigungsmutter 15 an die Gehäusewandung 31 andrückbar, wodurch gleichzeitig eine Befestigung der Leitungsdurchführvorrichtung 1 am Gehäuse 3 erfolgt. Das weitere Gehäuse 4 wird dann mit der entsprechenden Gehäusebohrung 9 auf den zweiten Endabschnitt 7 aufgeschoben, wobei auch gewisse Abweichungen in der Ausrichtung der Gehäusebohrung 8, 9 aufgrund der fehlenden Verschraubung zwischen zweitem Endabschnitt 7 und Gehäusebohrung 9 toleriert werden können. Nach Aufstecken der entsprechenden Gehäusebohrung 9 erfolgt ein Aufschieben des weiteren Federrings 30 auf den zweiten Endabschnitt 7 und eine Festlegung sowohl des Federrings als auch ein Befestigen der Leitungsdurchführvorrichtung relativ zum Gehäuse 4 mittels des Aufschraubens der Anschlagmutter 28.

Durch die lösbare Befestigung des Einsatzes 12 innerhalb des Außenkörpers 5 kann erst zu diesem Zeitpunkt der Einsatz mit den von ihm gehaltenen Flachsteckem 26 und entsprechenden elektrischen Leitungen 2 eingesetzt werden. Es besteht natürlich ebenfalls die Möglichkeit, bereits bei Befestigen des Außenkörpers 5 am Gehäuse 3 den Einsatz 12 im Außenkörper 5 anzuordnen oder bereits vorher angeordnet zu haben.

Die vollständige Leitungsdurchführung erfolgt dann durch Aufstecken entsprechender weiterer elektrischer Leitungen mit Flachsteckhülsen vom Gehäuse 3 her, die zusammen mit den Flachsteckem 26 eine entsprechende Steckverbindungseinrichtung 27 zur Verbindung der elektrischen Leitungen 2 bilden.

Die Flachstecker 26 sind innerhalb der entsprechenden schlitzförmigen Stecköffnungen 25 gehalten und können dort lösbar befestigt sein. Es besteht ebenfalls die Möglichkeit, dass die Flachstecker 26 an ihren den elektrischen Leitungen 2 zuweisenden Enden, siehe Figur 3, innerhalb des Einsatzes 12 eingegossen sind, um gegebenenfalls den Explosions- und/oder Schlagwetterschutz zu verbessern. Die durch die Stecköffnungen 25 hindurchgeführten freien Enden der Flachstecker 26 sind nicht vergossen, da dort die entsprechenden Flachsteckhülsen aufgesteckt werden.

## Patentansprüche

1. Leitungsdurchführungsvorrichtung (1) zur Durchführung von elektrischen Leitungen (2) durch insbesondere zwei benachbarte, explosions- und/oder schlagwettergeschützte Gehäuse (3, 4), welche Leitungsdurchführungsvorrichtung aufweist:
- einen hülsenförmigen Außenkörper (5), welcher mit gegenüberliegenden ersten und zweiten Endabschnitten (6, 7) in entsprechende Bohrungen (8, 9) der Gehäuse (3, 4) einsetzbar ist;
- wenigstens einen in einer Axialöffnung (10) des Außenkörpers (5) eingesetzten Einsatz (12) zur Halterung der durch die Vorrichtung (1) hindurchgeführten elektrischen Leitungen (2), und
- eine Befestigungseinrichtung (11) zur Befestigung der Vorrichtung (1) an zumindest einem Gehäuse (3, 4),
wobei die Befestigungseinrichtung (11) am ersten Endabschnitt (6) ein passend zu einem Innengewinde (13) der entsprechenden Gehäusebohrung (8) ausgebildetes Außengewinde (14), eine auf den ersten Endabschnitt (6) aufschraubbare Befestigungsmutter (15) und ein dem zweiten Endabschnitt (7) zugeordnetes, im Wesentlichen radial nach außen abstehendes Anschlagelement (16) aufweist, **dadurch gekennzeichnet, dass** der Außenkörper (5) in etwa mittig ein zumindest stellenweise radial nach außen abstehendes Abstandselement (17) aufweist, welches zwischen den Gehäusen (3, 4) bei eingesetzter Leitungsdurchführungsvorrichtung (1) angeordnet ist.

2. Leitungsdurchführungsvorrichtung nach Anspruch 1, **dadurch gekennzeichnet, dass** das Abstandselement (17) als um den Außenkörper (5) umlaufender Randflansch (18) ausgebildet ist.

3. Leitungsdurchführungsvorrichtung nach Anspruch 2, **dadurch gekennzeichnet, dass** der Außenkörper (5) einen im Wesentlichen kreisförmigen Querschnitt aufweist und der Randflansch (18) ringförmig um diesen umläuft.

4. Leitungsdurchführungsvorrichtung nach einem der vorangehenden Ansprüche **dadurch gekennzeichnet, dass** der Randflansch (18) insbesondere auf seinen beiden, jeweils zu den Gehäusen (3, 4) weisenden Seitenflächen (19, 20) ein umlaufendes Dichtelement (21, 22) aufweist.

5. Leitungsdurchführungsvorrichtung nach Anspruch 4, **dadurch gekennzeichnet, dass** die Seitenflächen (19, 20) als einen Explosionsschutz gewährleistende Spaltflächen ausgebildet sind.

6. Leitungsdurchführungsvorrichtung nach Anspruch 4 oder 5, **dadurch gekennzeichnet, dass** das Dichtelement (21, 22) teilweise in einer in der Seitenfläche (19, 20) ausgebildeten Aufnahmevertiefung (23) angeordnet ist.

7. Leitungsdurchführungsvorrichtung nach einem der vorangehenden Ansprüche, **dadurch gekennzeichnet, dass** der Einsatz (12) innerhalb der Axialöffnung (10) lösbar eingesetzt ist.

8. Leitungsdurchführungsvorrichtung nach einem der vorangehenden Ansprüche, **dadurch gekennzeichnet, dass** der Einsatz (12) wenigstens eine im Wesentlichen in Axialrichtung (34) verlaufende Aufnahme (24) aufweist, von welcher die elektrischen Leitungen (2, 3) aufgenommen und gegebenenfalls gehalten sind.

9. Leitungsdurchführungsvorrichtung nach Anspruch 8, **dadurch gekennzeichnet, dass** die Aufnahme (24) zumindest eine Stecköffnung (25) zum Einstecken eines an der elektrischen Leitung (2, 3) angebrachten Steckverbindungseinrichtungsteils (27) aufweist.

10. Leitungsdurchführungsvorrichtung nach Anspruch 9. **dadurch gekennzeichnet, dass** die Stecköffnung (25) im Wesentlichen schlitzförmig zum Einstecken von Flachsteckern (26) als Steckverbindungseinrichtungsteile (27) ausgebildet ist.

11. Leitungsdurchführungsvorrichtung nach einem der vorangehenden Ansprüche, **dadurch gekennzeichnet, dass** das Anschlagelement (16) als auf dem zweiten Endabschnitt (7) angeordnete, insbesondere ausschraubbare Anschlagmutter (28) ausgebildet ist.

12. Leitungsdurchführungsvorrichtung nach einem der vorangehenden Ansprüche, **dadurch gekennzeichnet, dass** jeweils zwischen Anschlagmutter (28) und/oder zwischen Befestigungsmutter (15) und Randflansch (18) ein im Wesentlichen ringförmiges Abstandsteil (29, 30) angeordnet ist

13. Leitungsdurchführungsvorrichtung nach Anspruch 12, **dadurch gekennzeichnet, dass** das Abstandsteil (29, 30) als Federring (31) ausgebildet ist.

14. Leitungsdurchführungsvorrichtung nach einem der vorangehenden Ansprüche, **dadurch gekennzeichnet, dass** der Außenkörper (5) an seinen Endabschnitten (6, 7) wenigstens zwei, einander gegenübeliegende Flachbereiche (32, 33) auf seiner Außenseite (35) aufweist.

## Claims

1. Cable bushing device (1) for the passage of electrical cables (2) through in particular two adjacent, explosion and / or flame-proof housings (3, 4), said cable bushing device comprising:
- a sleeve-like external body (5), which with oppositely situated first and second end sections (6, 7) can be inserted into corresponding bores (8, 9) in the housings (3, 4);
- at least one insert (12) inserted into an axial opening (10) of the external body (5) for retaining the electrical cables (2) which are passed through the device (1); and
- a fixing device (11) for fastening the device (1) at least to one housing (3, 4),
wherein the fixing device (11) on the first end section (6) has an external thread (14) formed to match an internal thread (13) of the corresponding housing bore (8), a mounting nut (15) which can be screwed onto the first end section (6) and a limit-stop element (16) assigned to the second end section (7) and which essentially protrudes radially outwards, **characterised in that** the external body (5) has at least in some places a spacing element (17) which protrudes radially outwards approximately in the middle and which is arranged between the housings (3, 4) when the cable bushing device (1) is in place.

2. Cable bushing device according to Claim 1,
**characterised in that**
the spacing element (17) is formed around the external body (5) as a circumferential edge flange (18).

3. Cable bushing device according to Claim 2,
**characterised in that**
the external body (5) has essentially a circular cross-section and the edge flange (18) surrounds it in an annular shape.

4. Cable bushing device according to one of the previous claims,
**characterised in that**
the edge flange (18) has a circumferential sealing element (21, 22) in particular on its two side faces (19, 20) facing the respective housings (3, 4).

5. Cable bushing device according to Claim 4,
**characterised in that**
the side faces (19, 20) are formed as gap surfaces to ensure explosion protection.

6. Cable bushing device according to Claim 4 or 5,
**characterised in that**
the sealing element (21, 22) is arranged partially in a retaining recess (23) formed in the side face (19, 20).

7. Cable bushing device according to one of the previous claims,
**characterised in that**
the insert (12) is inserted within the axial opening (10) detachably.

8. Cable bushing device according to one of the previous claims,
**characterised in that**
the insert (12) has at least one recess (24) running essentially in the axial direction (34) which accommodates the electrical cables (2, 3) and optionally holds them.

9. Cable bushing device according to Claim 8,
**characterised in that**
the recess (24) has at least one insertion opening (25) for inserting a plug connection device part (27) fitted to the electrical cable (2, 3)

10. Cable bushing device according to Claim 9,
**characterised in that**
the insertion opening (25) is formed essentially slot shaped for inserting flat plugs (26) as plug connection device parts (27).

11. Cable bushing device according to one of the previous claims,
**characterised in that**
the limit-stop element (16) is formed in particular as a screw-on limit-stop nut (28) arranged on the second end section (7).

12. Cable bushing device according to one of the previous claims,
**characterised in that**
an essentially annular shaped spacing part (29, 30) is arranged in each case between the limit-stop nut (28) and / or between the mounting nut (15) and the edge flange (18).

13. Cable bushing device according to Claim 12,
**characterised in that**
the spacing part (29, 30) is formed as a spring washer (31).

14. Cable bushing device according to one of the previous claims,
**characterised in that**
the external body (5) has on its end sections (6, 7) at least two opposingly situated flat regions (32, 33) on its outer side (35).

## Revendications

1. Dispositif de traversée de câble (1) permettant de faire passer des câbles électriques (2) notamment dans deux boîtiers adjacents anti-explosions et/ou antidéflagrants (3, 4), ledit dispositif de traversée de câble présentant :
- un corps externe en forme de douille (5) qui peut être inséré par ses première et deuxième extrémités terminales opposées (6, 7) dans des trous correspondants (8, 9) des boîtiers (3, 4) ;
- au moins un insert (12) inséré dans une ouverture axiale (10) du corps externe (5) et destiné à fixer les câbles électriques (2) traversant le dispositif (1), et
- un dispositif de fixation (11) permettant de fixer le dispositif (1) sur au moins un boîtier (3, 4),
le dispositif de fixation (11) présentant sur la première extrémité terminale (6) un filetage externe (14) adapté à un filetage interne (13) du trou correspondant percé dans le boîtier (8), un écrou de fixation (15) se vissant sur la première extrémité terminale (6) et un élément de butée (16) associé à la deuxième extrémité terminale (7) et faisant saillie de manière sensiblement radiale vers l'extérieur, **caractérisé en ce que** le corps externe (5) présente à peu près en son centre un élément d'écartement (17) qui fait saillie, au moins localement, de manière radiale vers l'extérieur et qui est disposé entre les boîtiers (3, 4) lorsque le dispositif de traversée de câble (1) est inséré.

2. Dispositif de traversée de câble selon la revendication 1, **caractérisé en ce que** l'élément d'écartement (17) est conçu sous la forme d'un rebord périphérique (18) entourant le corps externe (5).

3. Dispositif de traversée de câble selon la revendication 2, **caractérisé en ce que** le corps externe (5) présente une section transversale essentiellement circulaire qui est entourée de manière circulaire par le rebord périphérique (18).

4. Dispositif de traversée de câble selon l'une des revendications précédentes, **caractérisé en ce que** le rebord périphérique (18) présente, notamment sur ses deux surfaces latérales (19, 20) respectivement tournées vers les boîtiers (3, 4), un élément d'étanchéité (21, 22) périphérique.

5. Dispositif de traversée de câble selon la revendication 4, **caractérisé en ce que** les surfaces latérales (19, 20) sont conçues sous la forme de surfaces de clivage assurant une protection contre les explosions.

6. Dispositif de traversée de câble selon la revendication 4 ou 5, **caractérisé en ce que** l'élément d'étanchéité (21, 22) est agencé en partie dans une cavité de logement (23) pratiquée dans la surface latérale (19, 20).

7. Dispositif de traversée de câble selon l'une des revendications précédentes, **caractérisé en ce que** l'insert (12) est inséré à l'intérieur de l'ouverture axiale (10) de manière amovible.

8. Dispositif de traversée de câble selon l'une des revendications précédentes, **caractérisé en ce que** l'insert (12) présente au moins un logement (24) qui se prolonge essentiellement dans le sens axial (34) et qui reçoit et, éventuellement, retient les câbles électriques (2, 3).

9. Dispositif de traversée de câble selon la revendication 8, **caractérisé en ce que** le logement (24) présente au moins une ouverture d'enfichage (25) destinée à l'enfichage d'une partie de dispositif de connexion enfichable (27) située au niveau du câble électrique (2, 3).

10. Dispositif de traversée de câble selon la revendication 9, **caractérisé en ce que** l'ouverture d'enfichage (25) est essentiellement en forme de fente permettant l'enfichage de fiches plates (26) représentant les parties de dispositif de connexion enfichable (27).

11. Dispositif de traversée de câble selon l'une des revendications précédentes, **caractérisé en ce que** l'élément de butée (16) est conçu sous la forme d'un écrou de butée (28) notamment dévissable situé sur la deuxième extrémité terminale (7).

12. Dispositif de traversée de câble selon l'une des revendications précédentes, **caractérisé en ce qu'**un élément d'espacement (29, 30) essentiellement annulaire est respectivement agencé entre l'écrou de butée (28) et/ou entre l'écrou de fixation (15) et le rebord périphérique (18).

13. Dispositif de traversée de câble selon la revendication 12, **caractérisé en ce que** l'élément d'espacement (29, 30) consiste en un anneau élastique (31).

14. Dispositif de traversée de câble selon l'une des revendications précédentes, **caractérisé en ce que** le corps externe (5), au niveau de ses extrémités terminales (6, 7), présente au moins deux segments plats (32, 33) opposés l'un à l'autre sur sa face extérieure (35).
